# EUROPEAN PATENT SPECIFICATION

(11) **EP 3 181 382 B1**
(45) Date of publication and mention of the grant of the patent: **01.05.2019**
(21) Application number: 15832635.5
(22) Date of filing: 29.07.2015
(51) Int. Cl.: B60C 27/12, B60C 27/10

(54) **WINDING DEVICE**
WICKLUNGSVORRICHTUNG
DISPOSITIF D'ENROULEMENT

(30) Priority: 11.08.2014 JP 2014163838
(43) Date of publication of application: 21.06.2017
(73) Proprietor: Car Mate Mfg. Co., Ltd., Toshima-ku Tokyo 171-0051 (JP)
(72) Inventor: TANABE Shigeru, Tokyo 171-0051 (JP)
(74) Representative: Lambacher, Michael
(86) International application number: PCT/JP2015/071540
(87) International publication number: WO 2016/024477

(56) References cited:
- EP-A1- 1 935 674
- EP-A1- 2 441 600
- JP-A- H02 172 605
- JP-A- 2007 261 570
- JP-A- 2012 081 959
- JP-U- 3 129 055
- US-A- 1 680 515

## Description

### TECHNICAL FIELD

The present invention relates to a device for winding a wire, and more particularly to a winding device suitable for winding a fastening wire attached to tire anti-skidding.

### BACKGROUND ART

Known devices for winding a fastening wire for tire anti-skidding are disclosed in, for example, Patent Document 1 and Patent Document 2.

The winding device disclosed in Patent Document 1 is basically constituted by the following: a wheel that winds a wire by spring force; teeth parts provided on the outer periphery of the wheel; an engagement means that meshes with the teeth; and a case that accommodates these members. The engagement means includes meshing surfaces for suppressing the wheel from rotating clockwise or counterclockwise, and a position at which one of the meshing surfaces meshes with the teeth parts can be selected by an operation of an operation part that is formed integrally with the engagement means.

The winding device disclosed in Patent Document 2 has the same basic constitution as the winding device disclosed in Patent Document 1. As one point of difference, the engagement means and the operation part are formed separately.
A further Patent Document 3 describes a winding device for winding a fastening wire attached to a tire anti-skid device. The winding device comprises locking means with a first and a second locking tooth being in engagement with a plurality of teeth parts of a winding wheel for the wire.

### PRIOR ART DOCUMENTS

### PATENT DOCUMENTS

Patent Document 1: Japanese Registered Utility Model No. 3129055
Patent Document 2: Japanese Laid-Open Patent Publication No. 2012-81959
Patent Document 3: EP 1 935 674 A1

Both Patent documents 1 and 2 show the features of the preamble of claim 1.

### SUMMARY OF INVENTION

### PROBLEM TO BE SOLVED BY INVENTION

In both of the winding devices disclosed in Patent Documents 1 and 2, the wheel can be rotated in the direction opposite to the direction in which the rotation of the wheel is prevented by the setting of the position. Therefore, if rotation in the draw-out direction of the wire is prevented, the wire is automatically wound by the spring force. On the other hand, if rotation in the winding direction of the wire is prevented, the wire can be drawn out to a desired length when attaching the tire anti-skidding.

However, in both of the winding devices, switching between the positions must be performed by a manual operation of an operator. Therefore, after the wire is in a wound state, if the operation part is switched, either accidentally or upon receiving some kind of external force, to a position at which drawing out of the wire is permitted (a position at which rotation in the winding direction of the wire is prevented), slack may occur in the wire.

Thus, an object of the present invention is to provide a winding device with high safety wherein, even in the case that the operation part is positioned in a position at which drawing out of the wire is permitted, if the wire is drawn out due to some unforeseen circumstances, the operation part can be automatically switched to a position at which drawing out of the wire is prevented.

### MEANS FOR SOLVING THE PROBLEM

In order to achieve the above-described object, the winding device according to the present invention includes the following: a case; a rotation shaft that is fixed within the case; a wheel that is axially supported on the rotation shaft via a rotationally energizing means; a wire that is fixed at one end to the wheel and is wound in an energizing direction by the rotationally energizing means; and a control mechanism that controls a rotational operation of the wheel. The control mechanism is provided with the following: a plurality of teeth parts that are formed on the wheel; a locking means which includes a first locking tooth that engages with the teeth parts to prevent rotation of the wheel in a direction in which the wire is drawn out, and a second locking tooth that engages with the teeth parts to prevent rotation of the wheel in a direction in which the wire is wound; an operation means that switches an engagement state of the first locking tooth and the second locking tooth of the locking means with the teeth parts and which comprises a cam part; a fulcrum shaft which is in fixed engagement with the locking means, and which is in semi-fixed engagement with the operation means, such that the fulcrum shaft is rotatable with respect to the operation means within the range of a gap between the cam part of the operation means and a projecting area of the fulcrum shaft; a torsion spring between the locking means and the operation means, which makes the locking means and operation means repel each other so that the gap is maintained in the engagement direction of the second locking tooth; and a switching mechanism that, in the case that the operation means is to be maintained in an operation position at which the engagement state of the second locking tooth is achieved, pushes the locking means back to a state in which the second locking tooth engages with the teeth parts on the basis of the operation means by means of the torsion spring after the gap disappears due to an operation for drawing out the wire, and that, in the case that the operation means is not to be maintained in an operation position at which the engagement state of the second locking tooth is achieved, pushes the operation means back to an operation position at which the engagement state of the first locking tooth is achieved while maintaining the gap by means of the torsion spring on the basis of the locking means which has released the engagement state of the second locking tooth due to the operation for drawing out the wire, thereby shifting to a state in which the first locking tooth engages with the teeth parts.

The winding device characterized as described above may include a ratchet spring that, in a state in which the first locking tooth is engaged with the teeth parts, biases the operation means so as to press the first locking tooth in a direction to engage with the teeth parts after an operation for winding the wire has been performed by the wheel.

Due to this configuration, drawing out of the wire can be reliably suppressed.

Due to this configuration, it is possible to operate only the locking means in the range of the gap while maintaining the operation state of the operation means. Thus, the operation can be easily switched between drawing out of the wire and rewiriding of the wire with a one-handed operation.

In the winding device characterized as described above, the first locking tooth may be configured such that an angle formed by a straight line extending from a rotation center of the locking means to an engagement face of the first locking tooth and the engagement face is 90 degrees or less.

When configured in this way, the first locking tooth is meshed with the teeth parts during engagement. Thus, upon receiving an external force such as vibration or a centrifugal force, release of the engagement between the first locking tooth and the teeth parts can be suppressed.

In the winding device characterized as described above, the second locking tooth may have a surface that contacts the teeth parts in both the engagement direction and the engagement release direction, with a perpendicular line that drops from the rotation center of the locking means to a contact point between the second locking tooth and the teeth parts as a base point.

When configured in this way, vectors of different directions act in the engagement direction and the engagement release direction. Thus, a force with the perpendicular line as a base point can be balanced. Accordingly, the tensile force required when drawing out the wire can be reduced while reliably suppressing rewinding of the wire.

In the winding device characterized as described above, the locking means preferably includes a plurality of the first locking tooth.

When configured in this way, stress that is loaded onto the engagement portion can be dispersed. Thus, even if the thickness from the distal end of the teeth parts to the inner diameter of the wheel on which the teeth parts are formed is small, the occurrence of breakage or deformation can be prevented. Accordingly, the size of the overall winding device can be reduced.

### EFFECTS OF THE INVENTION

According to the winding device characterized as described above, even in the case that the operation means is positioned in a position at which drawing out of the wire is permitted, if the wire is drawn out due to some unforeseen circumstances, the operation means can be automatically switched to a position at which drawing out of the wire is prevented. Therefore, the safety of the winding device can be improved.

### BRIEF DESCRIPTION OF DRAWINGS

FIG. 1 is a disassembled perspective view illustrating the constitution of a winding device according to an embodiment;
FIG. 2 illustrates a front surface constitution of the winding device according to the embodiment;
FIG. 3 illustrates a cross-section constitution along line A-A in FIG. 2;
FIG. 4 is a perspective view illustrating the constitutions of the front surface, top surface, and left side surface of the winding device in a state in which a cover has been removed;
FIG. 5 illustrates a front surface constitution of the winding device in a state in which a cover has been removed;
FIG. 6 is a disassembled perspective view illustrating the constitution of a control mechanism;
FIG. 7 is a schematic view illustrating a partially enlarged top surface of a portion "A" in FIG. 4, wherein the engagement state between a first locking tooth and the teeth parts is illustrated;
FIG. 8 is a schematic view illustrating a partially enlarged top surface of a portion "A" in FIG. 4, wherein the engagement state between a second locking tooth and the teeth parts is illustrated;
FIG. 9 is a view for explaining the engagement between the first locking tooth and the teeth parts as well as the movement of the locking means;
FIG. 10 is a view for explaining a state in which the wire is drawn out when an operation means is operated from a state in which the first locking tooth is engaged with the teeth parts, or in a state in which the second locking tooth is engaged with the teeth parts;
FIG. 11 is a view for explaining the engagement state between the second locking tooth and the teeth parts;
FIG. 12 is a view for explaining how automatic switching is achieved by the action of a switching mechanism from a state in which the second locking tooth engages with the teeth parts; and
FIG. 13 illustrates a usage state of the winding device according to the embodiment.

### DESCRIPTION OF EMBODIMENTS

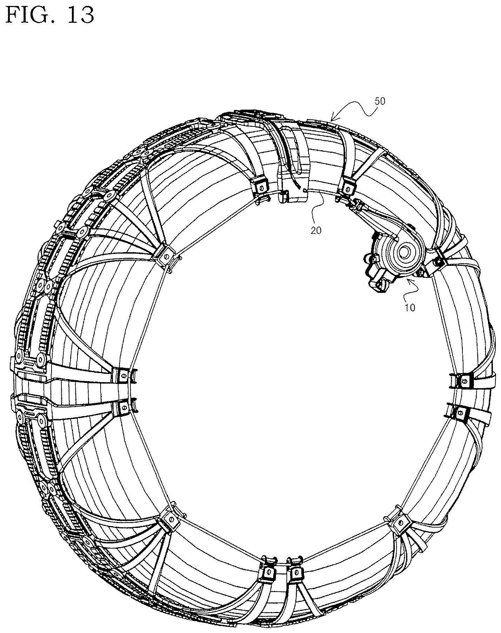

Embodiments of the winding device according to the present invention will now be explained in detail below referring to the drawings. First, referring to FIG. 13, the application to tire anti-skidding will be explained as one example of a usage state of a winding device 10.

### <Usage State>

In the case that the winding device 10 according to this embodiment is applied to tire anti-skidding, the winding device 10 is used to wind a fastening wire 20 for closely adhering an anti-skidding main body 50, which is to be mounted along the outer periphery of a vehicle tire, to the tire as shown in FIG. 13. Specifically, the winding device 10 may be configured to wind the fastening wire 20 upon fixing the winding device 10 to the anti-skidding main body 50.

### <Constitution of Winding Device>

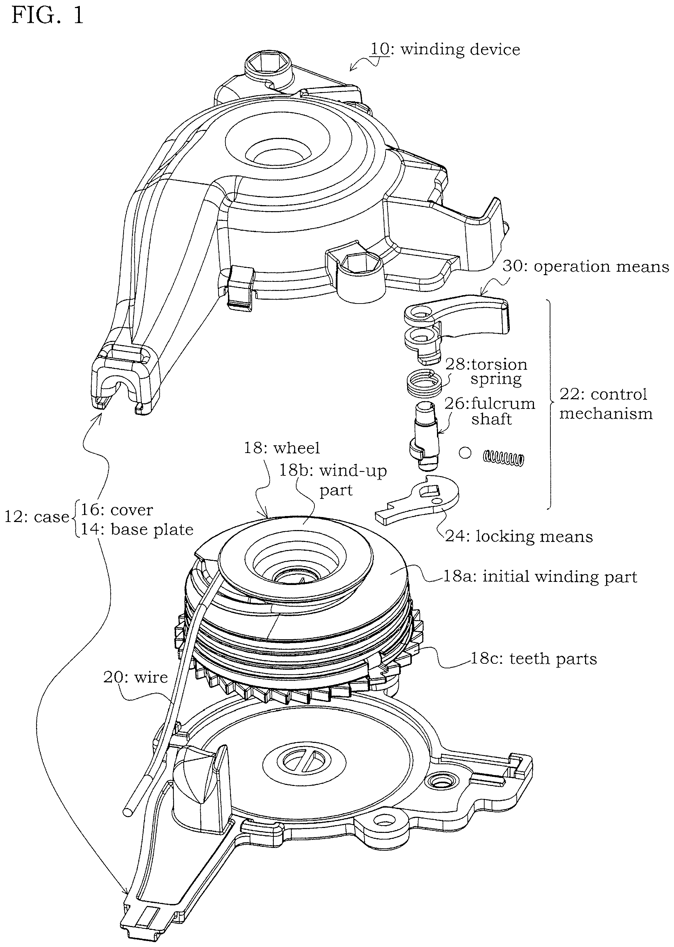

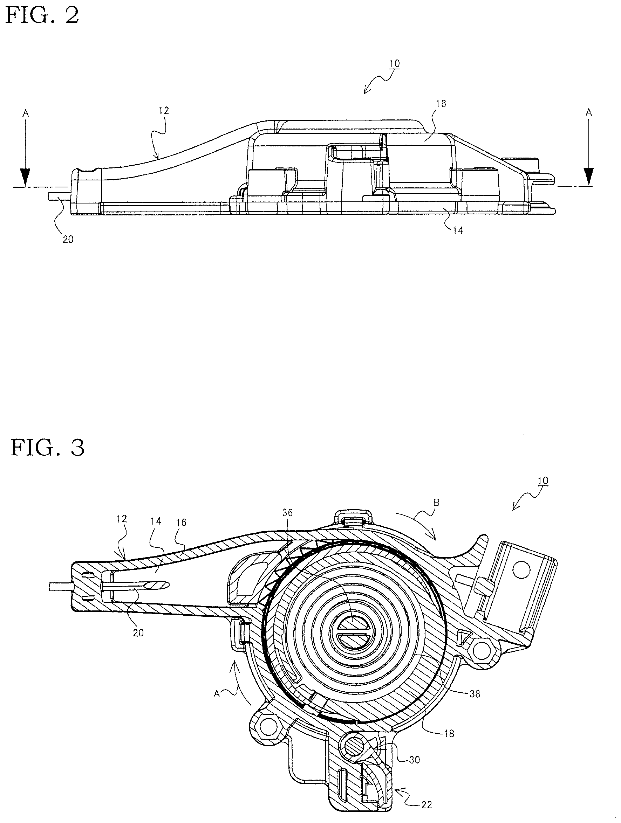

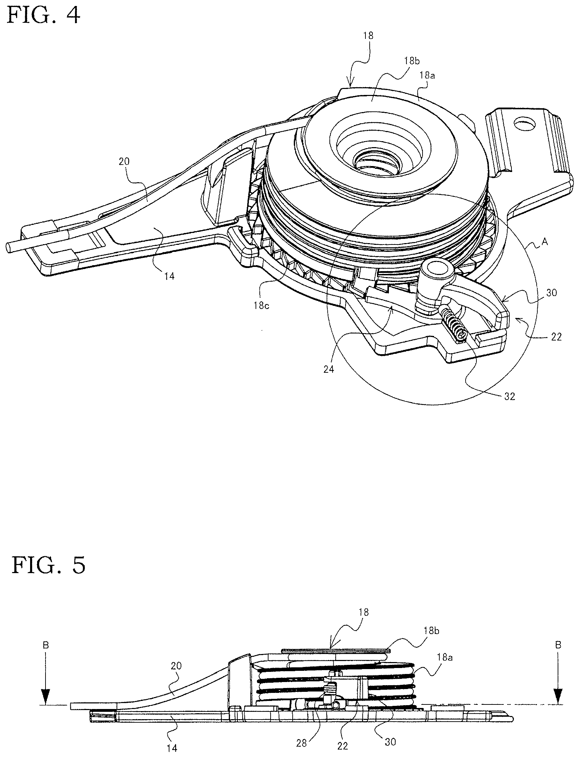

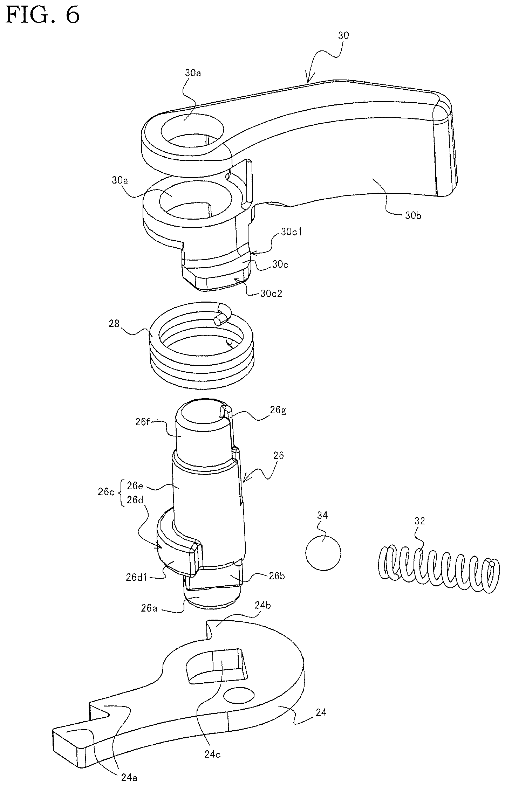

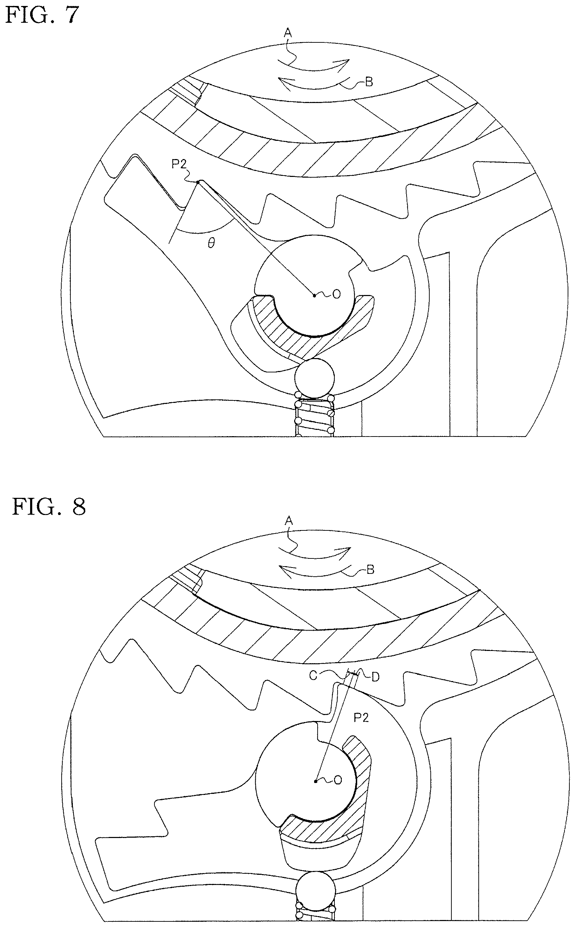

Next, referring to FIGS. 1 to 8, the concrete constitution of the winding device 10 according to this embodiment will be explained. FIG. 1 is a disassembled perspective view illustrating the constitution of the winding device. FIG. 2 is a front surface view, and FIG. 3 is a plan view showing the cross-section along line A-A in FIG. 2. FIG. 4 is a perspective view illustrating the front surface, top surface, and left side surface in a state in which a cover has been removed. FIG. 5 illustrates a front surface constitution in a state in which the cover has been removed. FIG. 6 is a disassembled perspective view illustrating the constitution of a control mechanism. FIG. 7 is a partially enlarged plan view illustrating the engagement state between a first locking tooth and the teeth parts. FIG. 8 is a partially enlarged plan view illustrating the engagement state between a second locking tooth and the teeth parts.

The winding device 10 according to this embodiment is basically constituted by the following: a case 12; a wheel 18; a wire 20; and a control mechanism 22.

The case 12 includes a base plate 14 and a cover 16. The base plate 14 is a member which serves as a foundation for fixing the winding device 10 to an object. Therefore, the base plate 14 must possess enough rigidity such that no deflection occurs due to the winding force of the wire 20 by the wheel 18 to be explained later. The cover 16 is a housing for accommodating the wheel 18, the wire 20, the control mechanism 22, and the like, and the cover 16 serves to seal the members which constitute the winding device 10 between the cover 16 and the base plate 14. By providing the cover 16, the anti-fouling properties of the mechanisms sealed within the cover 16 can be enhanced. Further, the design can be improved, and the safety when handling the winding device 10 can also be improved.

As shown in FIG. 3, a rotation shaft 36 is fixed in the space between the base plate 14 and the cover 16, and the wheel 18 is disposed with this rotation shaft 36 as a base point. A spiral spring 38 is disposed as a winding biasing means between the rotation shaft 36 and the wheel 18. By establishing the biasing direction of the spiral spring 38 and then fixing one end thereof to the rotation shaft 36 and fixing the other end to the wheel 18, a biasing force in a direction which counters the rotational force is generated when a rotational force is applied to the wheel 18. In this embodiment, the spiral spring 38 is disposed so that when a counterclockwise rotational force (in the direction of arrow A) is applied to the wheel 18, a clockwise biasing force (in the direction of arrow B) is generated.

The wheel 18 is an element for winding the wire 20. The wheel 18 includes an initial winding part 18a having a large diameter, a wind-up part 18b having a smaller diameter than that of the initial winding part 18a, and teeth parts 18c. By configuring the initial winding part 18a to have a large diameter and the wind-up part 18b to have a small diameter, changes in the winding torque of the wire 20 relative to changes in the winding biasing force generated with the rotation shaft 36 as a base point can be suppressed, and the wire 20 can be wound with a large force even during wind-up in which the winding biasing force becomes smaller.

Helical grooves are formed on the initial winding part 18a and the wind-up part 18b. The wire 20 that is wound on the wheel 18 is accommodated along the grooves, and thereby entanglement of the wire 20 can be prevented and the wire 20 can be guided so as to be wound around the wind-up part 18b during wind-up.

The teeth parts 18c form a gear provided on the outer periphery of the wheel 18. By engaging with a locking means 24 to be explained in detail later, the teeth parts 18c serve to restrict the rotation direction of the wheel 18. In the winding device 10 according to this embodiment, the teeth parts 18c are formed in the shape of saw blades, each having an acute angle part in the counterclockwise direction.

The wire 20 is fixed at one end part to an area of the wheel 18 which serves as the base point of the initial winding part 18a, and then the wire 20 is wound along the grooves in the counterclockwise direction. The wire 20 to be wound onto the wheel 18 is disposed such that after the wire 20 is wound up to the wind-up part 18b, the other end of the wire 20 is exposed to the outside of the case 12. The other end of the wire 20 is actually equipped with a stopper (not illustrated) so that the other end is not pulled into the case 12, and a prescribed tension is preferably applied to the other end of the wire 20 even in the wound-up state.

### <Control Mechanism>

The control mechanism 22 is basically constituted by the following: the teeth parts 18c formed on the wheel 18 as explained above; a locking means 24 that engages with the teeth parts 18c; and an operation means 30 that operates the locking means 24 (refer to the portion marked "A" in FIG. 4). As explained above, the teeth parts 18c are formed on the outer periphery of the wheel 18. In the present embodiment, the locking means 24 and the operation means 30 are configured to share a single fulcrum shaft 26. The fulcrum shaft 26 has different outer peripheral shapes along its axial direction. Roughly classifying the constituent areas of the fulcrum shaft 26, the fulcrum shaft 26 can be divided into the following: a base-side end 26a, a cover-side end 26f, a locking means arrangement part 26b, and an operation means arrangement part 26c (refer to FIG. 6). The base-side end 26a and the cover-side end 26f are constituted to have a circular cross-section shape so that the fulcrum shaft 26 is in a rotatable state while the fulcrum shaft 26 is fixed between the base plate 14 and the cover 16. In contrast, the locking means arrangement part 26b must fix the locking means 24 to the fulcrum shaft 26 so that the rotation of the fulcrum shaft 26 and the rotation of the locking means 24 match each other. Therefore, the locking means arrangement part 26b is constituted to have a cross-section with a shape other than a circular shape (in the example shown in FIG. 6, the cross-section is fan-shaped). Further, in order to support the operation means 30 in a semi-fixed state relative to the fulcrum shaft 26, the operation means arrangement part 26c is constituted by a rotation region 26e having a circular cross-section and a cam region 26d provided with a projecting area 26d1 in at least a portion of its circular cross-section. The area disposed in the rotation region 26e can freely rotate, and by abutting an abutment to the projecting area 26d1 of the cam region 26d, free rotation of the operation means 30 can be prevented and the locking means 24 can be moved together with the fulcrum shaft 26. A torsion spring 28, which transmits a force in a twisting direction that is generated between the fulcrum shaft 26 and the operation means 30 to both the fulcrum shaft 26 and the operation means 30 as a relative repulsive force, is disposed on the fulcrum shaft 26. Therefore, a torsion spring arrangement groove 26g is formed in the fulcrum shaft 26 from the cover-side end 26f to the rotation region 26e of the operation means arrangement part 26c.

The locking means 24 is a means which serves to restrict the rotation of the wheel 18 by engaging with the teeth parts 18c. In the present embodiment, the locking means 24 is constituted by a first locking tooth 24a and a second locking tooth 24b. A through hole 24c for inserting the fulcrum shaft 26 is formed between the first locking tooth 24a and the second locking tooth 24b. In the example illustrated in this embodiment, the cross-section shape of the through hole 24c is configured as a fan shape in order to match the cross-section shape of the locking means arrangement part 26b of the fulcrum shaft 26. Due to this configuration, sliding does not occur between the through hole 24c and the fulcrum shaft 26 to be inserted therein, and the behaviors of the fulcrum shaft 26 and the locking means 24 can be matched.

The first locking tooth 24a is an element which prevents rotation of the wheel 18 in a direction in which the wire 20 that is wound on the wheel 18 is drawn out. As shown in FIG. 7, the first locking tooth 24a according to this embodiment is constituted such that an angle θ formed by a straight line extending from the rotation center O of the locking means 24 to an engagement point P1 and a straight line that runs along the engagement face with the point P as a base point is 90 degrees or less (preferably, less than 90 degrees). Due to this configuration, if the wheel 18 rotates in the direction in which the wire 20 is drawn out (the direction of arrow A), the first locking tooth 24a engages so as to be meshed with the teeth parts 18c of the wheel 18. Therefore, even upon receiving an external force such as a centrifugal force of the rotating tire, a situation in which the engagement between the teeth parts 18c and the first locking tooth 24a is accidentally released is unlikely to occur, and thus the safety can be improved.

In the winding device 10 according to this embodiment, there are two of the first locking tooth 24a provided to the locking means 24, and each first locking tooth 24a is configured such that it can mesh with the teeth parts 18c. Due to this configuration, stress that is loaded onto the engagement portion can be dispersed. Thus, even if the thickness from the distal end of the teeth parts 18c to the inner diameter of the wheel 18 on which the teeth parts 18c are formed is small, the occurrence of breakage or deformation can be prevented. Accordingly, the size of the overall winding device can be reduced.

The second locking tooth 24b is an element which prevents rotation of the wheel 18 in a direction in which the wire 20 is wound (the direction of arrow B). As shown in FIG. 8, the second locking tooth 24b according to this embodiment is characterized in that it constitutes a flat surface so as to have a surface (engagement direction contact surface C, engagement release direction contact surface D) that contacts the teeth parts 18c in both a direction in which engagement with the teeth parts 18c is increased (engagement direction) and a direction in which engagement with the teeth parts 18c is released (engagement release direction), with a perpendicular line that drops from the rotation center O of the locking means 24 to a contact point P2 with the teeth parts 18c as a base point. Due to this configuration, the orientations of the vectors which act on the engagement direction contact surface C side and the engagement release direction contact surface D side are opposite to each other with the point P2 as a base point. Thus, rotation of the wheel 18 in the winding direction of the wire 20 can be restricted. Further, when releasing the engagement, a force with the point P2 as a base point is balanced, and the operation can be carried out with a small force.

As shown in detail in FIG. 6, the operation means 30 is a means for manually switching between the first locking tooth 24a and the second locking tooth 24b which constitute the locking means 24. The operation means 30 is basically constituted by the following: an attachment hole 30a; a lever 30b; and a cam part 30c.

The attachment hole 30a is an area into which the rotation region 26e of the operation means arrangement part 26c of the fulcrum shaft 26 is inserted, and the cross-section shape of the attachment hole 30a is circular. In the present embodiment, the attachment hole 30a is divided in the thickness direction thereof, and thus the attachment hole 30a is constituted such that two holes are aligned in the axial direction. The torsion spring 28 is disposed in the space between the two attachment holes 30a, and the end of the torsion spring 28 is engaged with the base end of the lever 30b.

The lever 30b is a manual operation part that extends from the area in which the attachment hole 30a is formed toward the outer peripheral side. Since the rotation of the wheel 18 is restricted by the operation of the lever 30b, the lever 30b is exposed to the outside of the cover 16 in an assembled state.

The cam part 30c is disposed in the cam region 26d of the operation means attachment part 26c of the fulcrum shaft 26. The cam part 30c serves as an abutment that abuts the projecting area 26d1, and serves to control the posture of the operation means 30 upon receiving a biasing force from a ratchet spring 32 to be explained in detail later. The cam part 30c is configured such that a gap is formed in the assembled state between the projecting area 26d1 of the cam region 26d and the cam part 30c, and so-called "play" is generated in the operation transmission between the operation means 30 and the fulcrum shaft 26. In other words, the gap of this play portion is a non-movable region in which a direct force is not transmitted between the operation means 30 and the locking means 24.

The cam part 30c includes an inclined surface 30c1 for maintaining the engagement between the first locking tooth 24a and the teeth parts 18c, and a flat surface 30c2 for maintaining the engagement between the second locking tooth 24b and the teeth parts 18c.

The ratchet spring 32 and a ball 34 serve to perform posture control of the operation means 30 via the cam part 30c by pushing the ball 34 against the inclined surface 30c1 or the flat surface 30c2 of the cam part 30c.

### <Switching Mechanism>

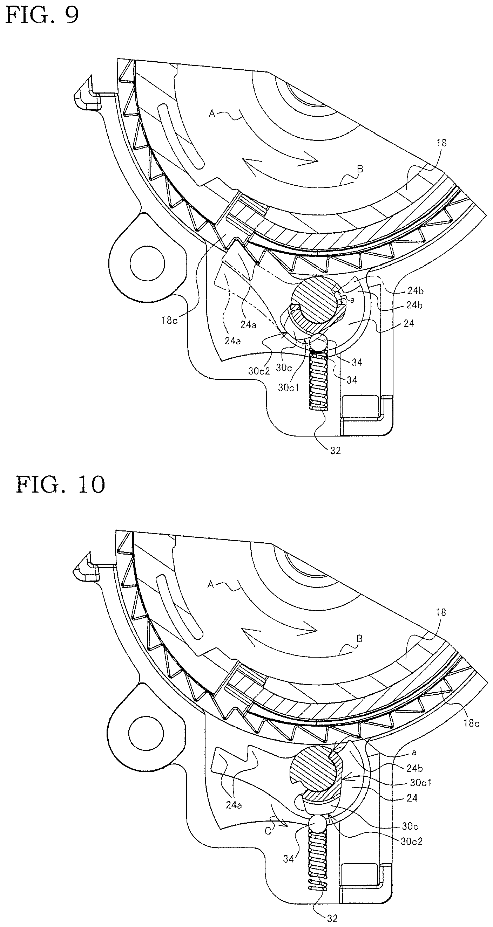

Next, the operation of the winding device 10 constituted as described above will be explained referring to FIGS. 9 to 12. First, referring to FIG. 9, the operation for preventing rotation of the wheel 18 in the direction in which the wire 20 is drawn out (the direction of arrow A) will be explained. As shown in FIG. 9, this function is executed when the first locking tooth 24a of the locking means 24 engages with the teeth parts 18c of the wheel 18. In this state, the pressing force that is generated by the ratchet spring 32 and transmitted via the ball 34 is applied to the inclined surface 30c1 that constitutes the cam part 30c, and thereby a force in a direction that pushes the first locking tooth 24a to the teeth parts 18c is applied to the locking means 24.

In this kind of state, if the wheel 18 rotates in a direction in which the wire 20 is wound (the direction of arrow B), the first locking tooth 24a is raised up along the inclined surface of the teeth parts 18c due to the meshing shape between the teeth parts 18c and the first locking tooth 24a. At this time, the ball 34 provided to the distal end of the ratchet spring 32 slides or rolls along the inclined surface 30c1 of the cam part 30c toward the flat surface 30c2 side, but does not yet reach the flat surface 30c2 by the time the first locking tooth 24a surpasses the apex of the inclined surface of the teeth part 18c. Therefore, when the first locking tooth 24a surpasses the inclined surface of the teeth part 18c, the ball 34 slides or rolls again along the inclined surface 30c1 of the cam part 30c in the opposite direction of the flat surface 30c2 due to the force that biases the first locking tooth 24a toward the teeth parts 18c side, and thus the locking means 24 is pushed back.

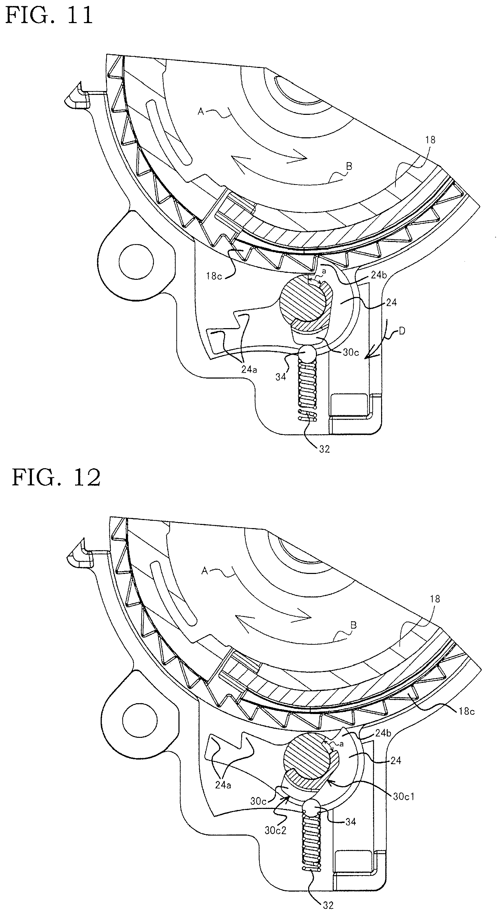

Next, if the ball 34, which is pressed via the ratchet spring 32, enters a state in which it abuts the flat surface 30c2 of the cam part 30c upon operation of the lever 30b of the operation means 30, as shown in FIG. 10, a gap "a" between the cam part 30c and the projecting area 26d1 of the fulcrum shaft 26 disappears. In this state, by maintaining the operation position of the lever 30b, only the locking means 24 is rotated in the direction indicated by arrow C by the force of the torsion spring 28, and the second locking tooth 24b enters a state in which it meshes with the teeth parts 18c as shown in FIG. 11.

In this kind of state, if the wheel 18 rotates in a direction in which the wire 20 is wound (the direction of arrow B), the second locking tooth 24b enters a state in which it is meshed with the teeth parts 18c, and thereby rotation of the wheel 18 is prevented. On the other hand, if the wheel 18 rotates in the direction in which the wire 20 is drawn out (the direction of arrow A), the locking means 24 rotates in the direction indicated by arrow D by only the amount of the gap "a" between the projecting area 26d1 of the fulcrum shaft 26 and the cam part 30c, and the second locking tooth 24b is raised up as shown in FIG. 10.

At this time, in the case that the operation state of the lever 30b of the operation means 30 is maintained, the pressing force of the torsion spring 28 acts on the fulcrum shaft 26 with the operation means 30 as a base point, and the locking means 24 is rotated in the direction indicated by arrow C so that the second locking tooth 24b which has moved beyond the teeth parts 18c is meshed again with the teeth parts 18c, thereby returning to the state shown in FIG. 11. On the other hand, in the case that the operation state of the lever 30b of the operation means 30 is not maintained, the pressing force generated by the torsion spring 28 acts on the operation means 30 with the fulcrum shaft 26 as a base point when the second locking means 24b moves beyond the teeth parts 18c, and thus the operation means 30 is pushed back in the direction indicated by arrow D.

If the operation means 30 is pushed back and the cam part 30c rotates, as shown in FIG. 12, the contact part of the ball 34, which transmits the pressing force of the ratchet spring 32, is shifted from the flat surface 30c2 to the inclined surface 30c1. Due to this shift in the pressing force, the cam part 30c rotates further in the direction of arrow D. Due to this action, the locking means 24 returns to the position at which the first locking tooth 24a is locked with the teeth parts 18c as shown in FIG. 9.

In the winding device 10 of the present embodiment constituted as described above, if the lever 30b of the operation means 30 is operated to a position at which drawing out of the wire 20 is prevented, the pressing force of the ratchet spring 32 acts on the cam part 30c of the operation means 30 so that a state in which drawing out of the wire 20 is prevented is constantly maintained.

In contrast, if the lever 30b of the operation means 30 is operated to a position at which winding of the wire 20 is prevented (a position at which drawing out of the wire 20 is permitted), in the case that the operation state of the lever 30b is sustained, after the wire 20 is drawn out, the locking means 24 returns again to a state in which winding of the wire 20 is prevented. On the other hand, if the operation state of the lever 30b is released, the force acting on the cam part 30c of the operation means 30 is shifted from the flat surface 30c2 to the inclined surface 30c1 due to the action of drawing out the wire 20, and thus the lever 30b returns to the position at which drawing out of the wire 20 is prevented and the locking means 24 also shifts to the corresponding position.

In other words, in the winding device 10 according to the present embodiment, the cam part 30c of the operation means 30, the projecting area 26d1 of the fulcrum shaft 26, and the ball 34 which transmits the pressing force of the torsion spring 28 function as a switching mechanism. Therefore, even if the lever 30b of the operation means 30 is positioned in a position at which drawing out of the wire 20 is permitted, if the wire 20 is drawn out due to some unforeseen circumstances, the operation means 30 is automatically switched to a position at which drawing out of the wire 20 is prevented. Thus, even if the lever 30b of the operation means 30 is switched, either accidentally or upon receiving some kind of external force, to a position at which drawing out of the wire 20 is permitted, slack does occur in the wire 20, and the winding device 10 with high safety can be provided.

### INDUSTRIAL APPLICABILITY

In the above-described embodiment, an example of applying the winding device to tire anti-skidding was given as a concrete application example of the winding device. However, the winding device 10 of the present invention can be applied to winding various wires, such as winding a wire for fixing cargo and winding a wire for various types of fastening.

### EXPLANATION OF REFERENCE NUMERALS

- 10: winding device
- 12: case
- 14: base plate
- 16: cover
- 18: wheel
- 18a: initial winding part
- 18b: wind-up part
- 18c: teeth parts
- 20: wire
- 22: control mechanism
- 24: locking means
- 24a: first locking tooth
- 24b: second locking tooth
- 24c: through hole
- 26: fulcrum shaft
- 26a: base-side end
- 26b: locking means arrangement part
- 26c: operation means arrangement part
- 26d: cam region
- 26d: projecting area
- 26e: rotation region
- 26f: cover-side end
- 26g: torsion spring arrangement groove
- 28: torsion spring
- 30: operation means
- 30a: attachment hole
- 30b: lever
- 30c: cam part
- 30c: inclined surface
- 30c2: flat surface
- 32: ratchet spring
- 34: ball
- 36: rotation shaft
- 38: spiral spring
- 50: anti-skidding main body

## Claims

1. A winding device (10) comprising:
a case (12);
a rotation shaft (36) that is fixed within the case (12);
a wheel (18) that is axially supported on the rotation shaft (36) via a rotationally energizing means;
a wire (20) that is fixed at one end to the wheel (18) and is wound in an energization direction by the rotationally energizing means; and
a control mechanism (22) that controls a rotational operation of the wheel (18),
wherein the control mechanism (22) comprises the following:
a plurality of teeth parts (18c) that are formed on the wheel (18);
a locking means (24) comprising a first locking tooth (24a) that engages with the teeth parts (18c) to prevent rotation of the wheel (18) in a direction in which the wire (20) is drawn out, and a second locking tooth (24b) that engages with the teeth parts (18c) to prevent rotation of the wheel (18) in a direction in which the wire (20) is wound;
an operation means (30) that switches an engagement state of the first locking tooth (24a) and the second locking tooth (24b) of the locking means (24) with the teeth parts (18c) of the wheel (18),
**characterized in that**
said operation means (30) comprises a cam part (30c); and **characterized by**
a fulcrum shaft (26) which is in fixed engagement with the locking means (24), and which is in semi-fixed engagement with the operation means (30), such that the fulcrum shaft (26) is rotatable with respect to the operation means (30) within the range of a gap (a) between the cam part (30c) of the operation means (30) and a projecting area (26d1) of the fulcrum shaft (26);
a torsion spring (28) between the locking means (24) and the operation means (30), which makes the locking means (24) and the operation means (30) repel each other so that the gap (a) is maintained in the engagement direction of the second locking tooth (24b); and
a switching mechanism that, in the case that the operation means (30) is to be maintained in an operation position at which the engagement state of the second locking tooth (24b) is achieved, pushes the locking means (24) back to a state in which the second locking tooth (24b) engages with the teeth parts (18c) on the basis of the operation means (30) by means of the torsion spring (28) after the gap (a) disappears due to an operation for drawing out the wire (20), and that, in the case that the operation means (30) is not to be maintained in an operation position at which the engagement state of the second locking tooth (24b) is achieved, pushes the operation means (30) back to an operation position at which the engagement state of the first locking tooth (24a) is achieved while maintaining the gap (a) by means of the torsion spring (28) on the basis of the locking means (24) which has released the engagement state of the second locking tooth (24b) due to the operation for drawing out the wire (20), thereby shifting to a state in which the first locking tooth (24a) engages with the teeth parts (18c).

2. The winding device (10) according to claim 1, comprising a ratchet spring (32) that, in a state in which the first locking tooth (24a) is engaged with the teeth parts (18c), biases the operation means (30) so as to push the first locking tooth (24a) in a direction to engage with the teeth parts (18c) after an operation for winding the wire (20) has been performed by the wheel (18).

3. The winding device (10) according to any one of claims 1 to 2, wherein the first locking tooth (24a) is configured such that an angle formed by a straight line extending from a rotation center of the locking means (24) to an engagement face of the first locking tooth (24a) and the engagement face is 90 degrees or less.

4. The winding device (10) according to any one of claims 1 to 3, wherein the second locking tooth (24b) comprises a surface that contacts the teeth parts (18c) in both an engagement direction and an engagement release direction, with a perpendicular line that drops from the rotation center of the locking means (24) to a contact point between the second locking tooth (24b) and the teeth parts (18c) as a base point.

5. The winding device (10) according to any one of claims 1 to 4, wherein the locking means (24) comprises a plurality of the first locking tooth (24a).

## Patentansprüche

1. Wicklungsvorrichtung (10) umfassend:
ein Gehäuse (12);
eine Drehwelle (36), die in dem Gehäuse (12) fixiert ist;
ein Rad (18), das über eine Drehantriebseinrichtung axial auf der Drehwelle (36) gelagert ist;
einen Draht (20), der an einem Ende an dem Rad (18) fixiert ist und in einer Antriebsrichtung durch die Drehantriebseinrichtung gewickelt ist; und
einen Steuermechanismus (22), der eine Drehbetätigung des Rades (18) steuert, wobei der Steuermechanismus (22) Folgendes umfasst:
eine Vielzahl von Zahnteilen (18c), die auf dem Rad (18) ausgebildet sind;
eine Verriegelungseinrichtung (24) umfassend einen ersten Verriegelungszahn (24a), der in die Zahnteile (18c) eingreift, um ein Drehen des Rades (18) in eine Richtung zu verhindern, in der der Draht (20) herausgezogen wird, und einen zweiten Verriegelungszahn (24b), der in die Zahnteile (18c) eingreift, um ein Drehen des Rades (18) in eine Richtung zu verhindern, in der der Draht (20) gewickelt wird;
eine Betätigungseinrichtung (30), die zwischen einem Eingriffszustand des ersten Verriegelungszahns (24a) und des zweiten Verriegelungszahns (24b) der Verriegelungseinrichtung (24) mit den Zahnteilen (18c) des Rades (18) umschaltet,
**dadurch gekennzeichnet, dass** die Betätigungseinrichtung (30) einen Nockenteil (30c) aufweist; und **gekennzeichnet durch**
eine Drehspindel (26), die in fixiertem Eingriff mit der Verriegelungseinrichtung (24) steht und die in halbfixiertem Eingriff mit der Betätigungseinrichtung (30) steht, so dass die Drehspindel (26) bezogen auf die Betätigungseinrichtung (30) im Bereich einer Lücke (a) zwischen dem Nockenteil (30c) der Betätigungseinrichtung (30) und einem vorstehenden Bereich (26d1) der Drehspindel (26) drehbar ist;
eine Torsionsfeder (28) zwischen der Verriegelungseinrichtung (24) und der Betätigungseinrichtung (30), die bewirkt, dass sich die Verriegelungseinrichtung (24) und die Betätigungseinrichtung (30) gegenseitig zurückstoßen, so dass die Lücke (a) in der Eingriffsrichtung des zweiten Verriegelungszahns (24b) gehalten wird; und
einen Umschaltmechanismus, der, falls die Betätigungseinrichtung (30) in einer Betätigungsposition gehalten werden soll, in der der Eingriffszustand des zweiten Verriegelungszahns (24b) erreicht ist, die Verriegelungseinrichtung (24) zurück in einen Zustand drückt, in dem der zweite Verriegelungszahn (24b) in die Zahnteile (18c) eingreift, auf der Basis der Betätigungseinrichtung (30) mittels der Torsionsfeder (28), nachdem die Lücke (a) aufgrund einer Betätigung zum Herausziehen des Drahts (20) verschwunden ist, und falls die Betätigungseinrichtung (30) nicht in einer Betätigungsposition gehalten werden soll, in der der Eingriffszustand des zweiten Verriegelungszahns (24b) erreicht ist, die Betätigungseinrichtung (30) zurück in eine Betätigungsposition drückt, in der der Verriegelungszustand des ersten Verriegelungszahns (24a) erreicht ist, während die Lücke (a) mittels der Torsionsfeder (28) auf der Basis der Verriegelungseinrichtung (24) aufrecht erhalten wird, die den Eingriffszustand des zweiten Verriegelungszahns (24b) aufgrund der Betätigung zum Herausziehen des Drahts (20) freigegeben hat, wodurch in einen Zustand geschaltet wird, in dem der erste Verriegelungszahn (24a) in die Zahnteile (18c) eingreift.

2. Wicklungsvorrichtung (10) nach Anspruch 1 umfassend eine Sperrklinkenfeder (32), die in einem Zustand, in dem der erste Verriegelungszahn (24a) mit den Zahnteilen (18c) in Eingriff steht, die Betätigungseinrichtung (30) vorspannt, so dass der erste Verriegelungszahn (24a) in eine Richtung gedrückt wird, um in die Zahnteile (18c) einzugreifen, nachdem von dem Rad (18) eine Betätigung zum Wickeln des Drahtes (20) durchgeführt wurde.

3. Wicklungsvorrichtung (10) nach einem der Ansprüche 1 oder 2, wobei der erste Verriegelungszahn (24a) derart ausgebildet ist, dass ein Winkel, der von einer geraden Linie, die sich von einem Drehzentrum der Verriegelungseinrichtung (24) zu einer Eingriffsfläche des ersten Verriegelungszahns (24a) erstreckt, und von der Eingriffsfläche gebildet wird, 90 Grad oder weniger beträgt.

4. Wicklungsvorrichtung (10) nach einem der Ansprüche 1 bis 3, wobei der zweite Verriegelungszahn (24b) eine Oberfläche aufweist, die die Zahnteile (18c) sowohl in der Eingriffsrichtung als auch in der Eingriffslösungsrichtung kontaktiert, mit einer senkrechten Linie, die vom Drehzentrum der Verriegelungseinrichtung (24) zu einem Kontaktpunkt zwischen dem zweiten Verriegelungszahn (24b) und den Zahnteilen (18c) fällt, als Basispunkt.

5. Wicklungsvorrichtung (10) nach einem der Ansprüche 1 bis 4, wobei die Verriegelungseinrichtung (24) eine Vielzahl der ersten Verriegelungszähne (24a) aufweist.

## Revendications

1. Dispositif d'enroulement (10) comprenant:
un boîtier (12);
un arbre de rotation (36) qui est fixé au sein du boîtier (12);
une roue (18) qui est supportée dans le sens axial sur l'arbre de rotation (36) via un moyen d'alimentation en rotation;
un câble (20) qui est fixé au niveau d'une extrémité à la roue (18) et est enroulé dans une direction d'alimentation par le moyen d'alimentation en rotation; et
un mécanisme de commande (22) qui commande un actionnement en rotation de la roue (18),
dans lequel le mécanisme de commande (22) comprend ce qui suit:
une pluralité de parties dentées (18c) qui sont formées sur la roue (18);
un moyen de verrouillage (24) comprenant une première dent de verrouillage (24a) qui se met en prise avec les parties dentées (18c) pour empêcher une rotation de la roue (18) dans une direction dans laquelle le câble (20) est étiré, et une seconde dent de verrouillage (24b) qui se met en prise avec les parties dentées (18c) pour empêcher une rotation de la roue (18) dans une direction dans laquelle le câble (20) est enroulé;
un moyen d'actionnement (30) qui commute un état de prise de la première dent de verrouillage (24a) et de la seconde dent de verrouillage (24b) du moyen de verrouillage (24) avec les parties dentées (18c) de la roue (18),
**caractérisé en ce que** ledit moyen d'actionnement (30) comprend une partie à came (30c); et **caractérisé par**
un arbre d'appui (26) qui est en prise fixe avec le moyen de verrouillage (24), et qui est en prise semi-fixe avec le moyen d'actionnement (30), de telle sorte que l'arbre d'appui (26) est apte à entrer en rotation par rapport au moyen d'actionnement (30) au sein de la plage d'un écartement (a) entre la partie à came (30c) du moyen d'actionnement (30) et une zone de projection (26d1) de l'arbre d'appui (26);
un ressort de torsion (28) entre le moyen de verrouillage (24) et le moyen d'actionnement (30), qui amène le moyen de verrouillage (24) et le moyen d'actionnement (30) à se repousser mutuellement de sorte que l'écartement (a) est maintenu dans la direction de prise de la seconde dent de verrouillage (24b); et
un mécanisme de commutation qui, dans le cas où le moyen d'actionnement (30) est censé être maintenu dans une position d'actionnement dans laquelle l'état de prise de la seconde dent de verrouillage (24b) est obtenu, ramène en le poussant le moyen de verrouillage (24) dans un état où la seconde dent de verrouillage (24b) se met en prise avec les parties dentées (18c) sur la base du moyen d'actionnement (30) au moyen du ressort de torsion (28) après que l'écartement (a) a disparu en raison d'un actionnement pour étirer le câble (20), et qui, dans le cas où le moyen d'actionnement (30) n'est pas censé être maintenu dans une position d'actionnement dans laquelle l'état de prise de la seconde dent de verrouillage (24b) est obtenu, ramène en le poussant le moyen d'actionnement (30) dans une position d'actionnement dans laquelle l'état de prise de la première dent de verrouillage (24a) est obtenu tandis que l'écartement (a) au moyen du ressort de traction (28) sur la base du moyen de verrouillage (24) qui a libéré l'état de prise de la seconde dent de verrouillage (24b) en raison de l'actionnement destiné à étirer le câble (20), passant ainsi dans un état où la première dent de verrouillage (24a) se met en prise avec les parties dentées (18c).

2. Dispositif d'enroulement (10) selon la revendication 1, comprenant un ressort à cliquet (32) qui, dans un état où la première dent de verrouillage (24a) est en prise avec les parties dentées (18c), contraint le moyen d'actionnement (30) de manière à pousser la première dent de verrouillage (24a) dans une direction pour se mettre en prise avec les parties dentées (18c) après qu'un actionnement destiné à enrouler le câble (20) a été mené à bien par la roue (18).

3. Dispositif d'enroulement (10) selon l'une quelconque des revendications 1 à 2, dans lequel la première dent de verrouillage (24a) est configurée de telle sorte qu'un angle formé par une ligne droite s'étendant à partir d'un centre de rotation du moyen de verrouillage (24) vers une face de prise de la première dent de verrouillage (24a) et la face de prise est de 90 degrés ou moins.

4. Dispositif d'enroulement (10) selon l'une quelconque des revendications 1 à 3, dans lequel la seconde roue de verrouillage (24b) comprend une surface qui entre en contact avec les parties dentées (18c) à la fois dans une direction de prise et une direction de libération de prise, avec une ligne perpendiculaire qui tombe du centre de rotation du moyen de verrouillage (24) vers un point de contact entre la seconde roue de verrouillage (24b) et les parties dentées (18c) en tant que point de base.

5. Dispositif d'enroulement (10) selon l'une quelconque des revendications 1 à 4, dans lequel le moyen de verrouillage (24) comprend une pluralité de la première dent de verrouillage (24a).
